# EUROPEAN PATENT SPECIFICATION

(11) **EP 2 338 764 B1**
(45) Date of publication and mention of the grant of the patent: **04.03.2015**
(21) Application number: 09425522.1
(22) Date of filing: 22.12.2009
(51) Int. Cl.: B62D 7/00, B62D 5/24, B62D 7/14

(54) **Steering control system for vehicles with one steering axle**
Lenkungssteuersystem für Kraftfahrzeugen mit einer Lenkachse
Système de commande de direction pour véhicules avec un essieu directeur

(43) Date of publication of application: 29.06.2011
(73) Proprietor: Astra Veicoli Industriali S.p.A., 29100 Piacenza (IT)
(72) Inventor: Antonio Benetti, 25010 San Zeno Naviglio (IT)
(74) Representative: Franzolin, Luigi

(56) References cited:
- EP-A2- 1 826 098
- WO-A1-2009/026601
- DE-A1- 2 920 308
- DE-A1- 10 230 309
- JP-A- 2000 142 449
- US-A1- 2004 245 739
- US-A1- 2006 208 443

## Description

### Application field of the invention

The present invention refers to the field of the steering control systems for vehicles with one front steering axle and in particular for multi-axle industrial vehicles with one front steering axle.

### Description of the prior art

The steering control systems for vehicles with one or two adjacent front steering axles present several problems, the most important of which are described below.

Firstly, the systems known in the art are particularly complex in terms of the realized kinematic motion and comprise a number of components, joints, crank gears and driving gears which, with the passing of the time, may generate backlashes compromising the precision of the steering control system.

Another problem of the systems known in the art derives from the fact that the hydraulic power steering is placed almost under the driving place, therefore the distance between the driving steering gear and the steering axles is considerable, and the distribution of the forces among the different components negatively affects the strength and the precision of the system itself.

A further problem to be considered while defining the kinematic mechanism controlling the steering, in case of two steering axles, is generated by the fact that the two axles do not steer in the same way, since the first axle, with respect to the front part of the vehicle, needs to have a larger steering angle than the second axle. Strength and precision problems are even more serious when the system comprises an additional hydraulic cylinder, for assisting the hydraulic power steering . Also in this case, the action of the additional cylinder has to be distributed between the steering axles by means of driving gears and of tie rods, some of which may be housed over the frame, in order to avoid interfering with the other vehicle components, but thus reducing the space for the driving cabin, for the passage for the cables and for the different hydraulic and pneumatic pipes, and for installing equipment on the back of the cabin.

In some of the cases with two steering axles, said additional cylinder directly acts on one axle, while the assistance for the other axle is realized by means of two, three or more driving gears, generating a remarkable inequality in the distribution of the forces, between the assistance provided to the first or to the second axle of the vehicle.

DE10230309, EP1826098, US2004/245739 disclose steering systems having the control rod of the first axle directly hinged on the oscillating arm of the hydraulic power steering. Document DE 2920308 A1 discloses a vehicle according to the preamble of claim 1.

Consequently, also the hydraulic system for activating the hydraulic power steering and the additional cylinder is complex, due to the inconvenient position of the hydraulic power steering , with awkward passages for the pipes which reach the oil tank and the hydraulic power steering pump on the engine.

Moreover, the different components of the steering kinematic mechanism are fixed to the vehicle frame, which therefore has to support a steering control system with various components, joints and driving gears, increasing its production costs.

Finally, it is difficult to design such steering unit since the disposition of its various elements should be able to adapt to the different situations wherein the vehicle needs either one or two steering axles.

### Summary of the invention

Therefore the aim of the present invention is to overcome all the drawbacks mentioned above and to provide a steering control system for vehicles with one or two steering axles suitable to solve the problems of strength, precision, and limited dimensions.

The subject of the present invention is an industrial vehicle according to claim 1.

The subject of the present invention is in particular an industrial vehicle with one steering axle, as described more fully in the claims which are an integral part of the present description.

### Brief description of the Figures

Further purposes and advantages of the present invention will become clear from the following detailed description of a preferred embodiment (and relative alternative embodiments) and the drawings that are attached hereto, which are merely illustrative and non-limitative, in which:
figure 1 shows a perspective view of a vehicle comprising a steering control system for vehicles with one steering axles according to the present invention,
figure 2 shows another perspective view of the same vehicle as in figure 1,

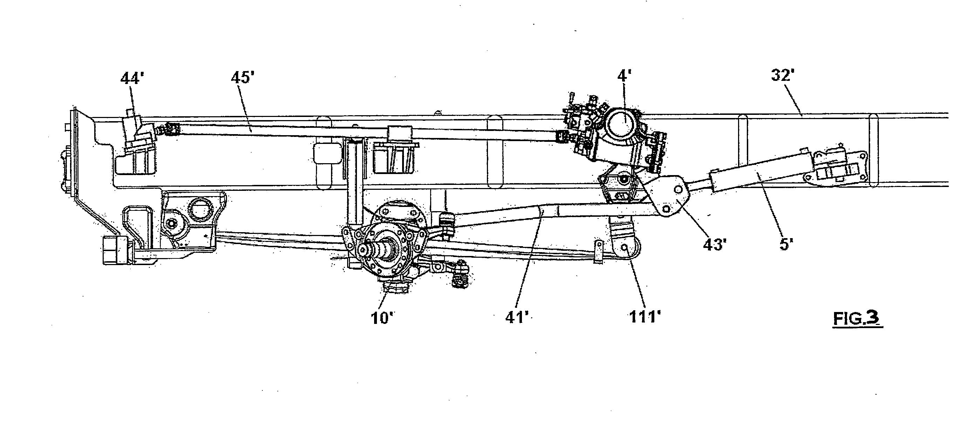

figure 3 shows a side view of the same vehicle as in the previous figures.

In the drawings the same reference numbers and letters identify the same elements or components.

### Detailed description of preferred embodiments of the invention

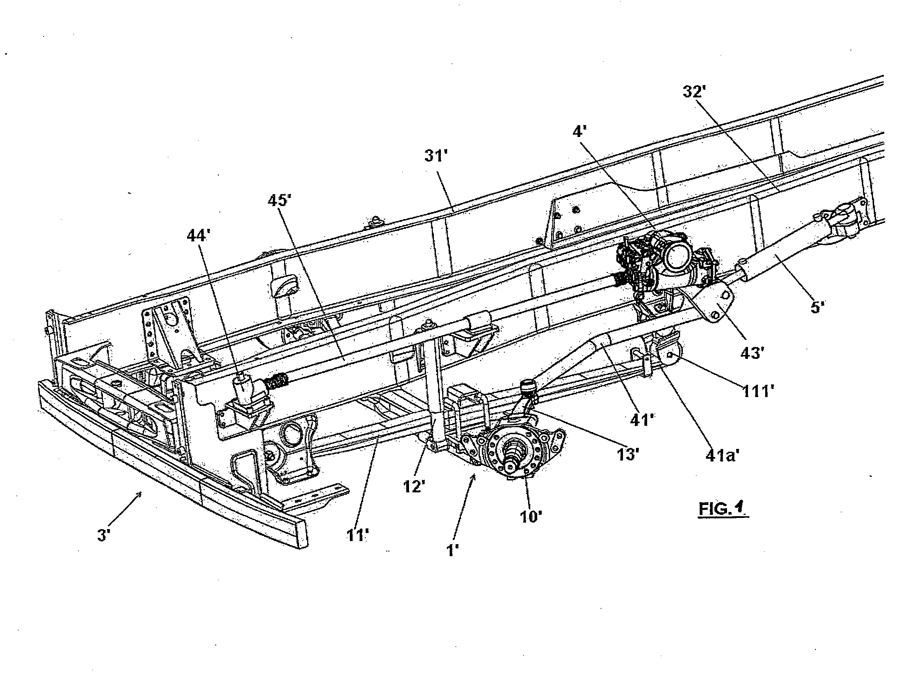

With reference to figure 1, the steering control system according to the present invention is connected to the frame 3' of a vehicle with a single steering axle. The frame comprises, for example, a pair of parallel and adjacent longitudinal members 31' and 32'.

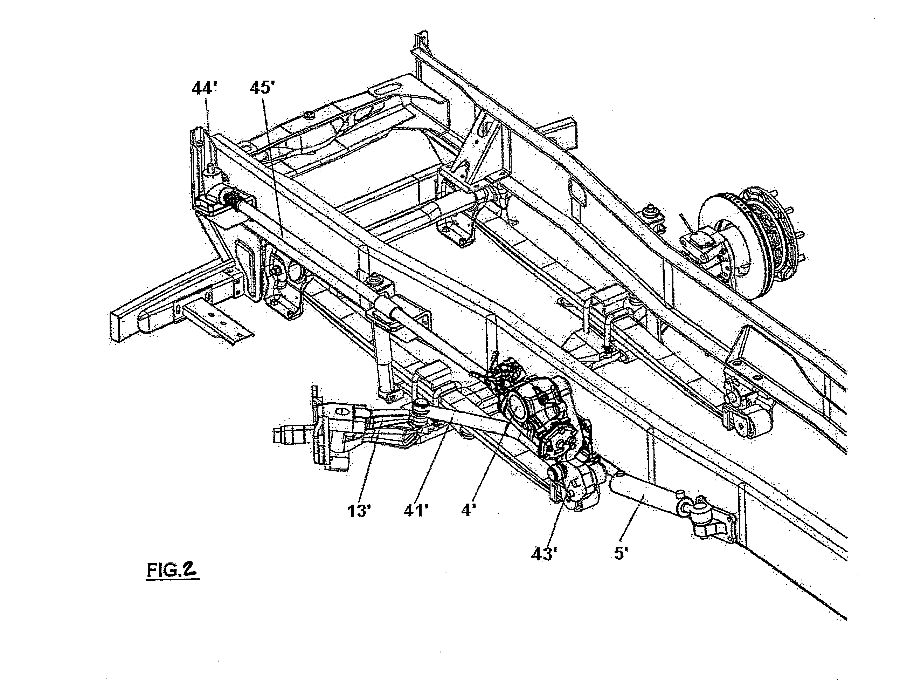

Figure 2 shows the vehicle side where the driving place is positioned.

According to the present invention, in correspondence of the driving place, a 90° driving gear box 44' is placed, suitable for transferring the movements of the steering gear to the hydraulic power steering 4'.

The hydraulic power steering 4' has an horizontal configuration, namely the connecting shaft 45', defining a cardan shaft, which extends in a parallel way with respect to the longitudinal member 32', is parallel to the hydraulic power steering axis, while the lever 43' on the hydraulic power steering 4' is orthogonal to the driving steering gear itself.

Therefore the hydraulic power steering is placed in a rear position with respect to the driving position and in particular in a rear position with respect to the axle 1' of the vehicle.

A control rod 41' of the steering axle 1' is hinged to the arm 43' of the hydraulic power steering. A first end of the first rod 41' is therefore connected to the arm 43' of the hydraulic power steering 4' while its second end is connected to the hub 10' of the first axle.

Preferably the second end of the rod 41' is connected to the hub 10' by means of a lever 13', for example by means of ball joints.

By varying the distance from the fulcrum of the arm 43', it is possible to vary the travel of each rod and therefore the steering angle. Moreover, the hydraulic power steering 4' is integrally connected to the frame a small space above the axles. Thus the space occupied by the steering system is limited in height and therefore it leaves more free space for the vehicle arrangement over the frame. No lever or tie rod or joint is placed in an upper position with respect to the frame, which allows a simple allocation of the cabin, of the pipes, of the equipment, etc..

According to an alternative embodiment, also in the case the vehicle may comprise an additional control piston 5' which cooperates with the hydraulic power steering 4'. Such additional piston 5' directly acts of the arm 43', a first end of said additional piston is hinged to said arm 43', while its second end is connected to the frame 32' by means of a ball joint.

The additional piston 5' may be housed behind the hydraulic power steering 4', namely in a position opposite to the housing of the steering driving gear 45' with respect to the hydraulic power steering.

The steering gear transmits the motion to the steering box 44' which does not stress the frame, since the torque applied on the steering box and on the driving gear 45' is the same as the one applied by driver. Hence it is preferable to realize a driving gear 45' with longer rods for the parts that are subjected to low torque and therefore low stresses and low wear, and shorter leverages and rods for the parts which are subjected to higher stresses.

According to a preferred embodiment, the axle 1' comprises a leaf string suspension system 11'. The leaf spring 11' is hinged to the frame in a first point and it is connected to the frame in a second point 41a' by means of a connecting rod 111'.

The hydraulic power steering 4' is preferably positioned in correspondence of said connecting rod 111'.

A shock absorber 12' is placed in correspondence of the axle 1', between the frame 32' and the leaf spring 11'. When the arm of the hydraulic power steering rotates around its own fulcrum, it pushes forward or backward the rod 41', which transmits the motion to the lever 13' which is integral to the hub 10'. In order to avoid the limitation of the steering angles, the rods 41' is partially curved, so that a first part extends in a parallel way with respect to the frame and a second part stretches out towards the respective hub.

It is preferable to strengthen the area where the hydraulic power steering 4' should be placed, for example by applying a cross member connecting the two longitudinal members, in order to counterbalance torsion stress and deforming torque applied by the hydraulic power steering on the longitudinal member.

The advantages deriving from the use of this invention are evident:
- the distribution of the forces between the control rods (41, 42, 41') is direct, namely without any driving gear, crank gear, etc.,
- no element stretches out from the frame;
- the additional cylinder is connected so that it can directly act on the axle or on both axles;
- the steering angles of the wheels can be optimized by varying the connecting point of the arms of the hydraulic power steering , or by varying the positioning of the ball joints connecting said rods to the hubs;
- the stresses applied on the frame are limited to the connection area between it and the hydraulic power steering, since the front control part is realized by means of a cardan shaft (45') which can bear limited activation stresses.

It will be apparent to the person skilled in the art that further alternative and equivalent embodiments of the invention can be conceived and reduced to practice without departing from the scope of the invention.

From the description set forth above it will be possible for the person skilled in the art to embody the invention with no need of describing further construction details.

## Claims

1. Industrial vehicle comprising a frame (32') and a steering control system comprising
- only one steering axle (1'),
- a hydraulic power steering (4') having an arm (43'),
- a control rod (41') of the steering axle (1') the arm (43') rotating around its own fulcrum defined in the hydraulic power steering and pushing forward or backward the control rod (41'), the system being **characterized in that** said hydraulic power steering (4') is connected to the frame (32') in a rear position with respect to said one steering axle (1'), and **in that** said control rod (41') is directly hinged to said arm (43').

2. Vehicle according to the claim 1, wherein the frame has a longitudinal member (32'), and wherein said hydraulic power steering (4') has a 90° configuration, comprising a cardan (45') which extends in a parallel way with respect to the longitudinal member (32') and in a perpendicular way with respect to the arm (43') of the hydraulic power steering (4').

3. Vehicle according to claim 1, further comprising a piston (5') directly acting on said arm (43') of the hydraulic power steering (4').

4. Vehicle according to claim 3, wherein the first end of said additional piston (5') is connected to the frame (32') and its second end is connected to said arm (43').

5. Vehicle according to claim 3, wherein said piston (5') is placed in a position opposite to the cardan housing (45') and with respect to the hydraulic power steering (4').

## Patentansprüche

1. Industriefahrzeug, das einen Rahmen (32') und ein Lenksteuersystem umfasst, das Folgendes umfasst:
- nur eine Lenkachse (1'),
- eine hydraulische Servolenkung (4'), die einen Arm (43') besitzt,
- eine Steuerstange (41') der Lenkachse (1'),
wobei sich der Arm (43') um seinen eigenen Drehpunkt dreht, der in der hydraulischen Servolenkung definiert ist, und die Steuerstange (41') vorwärts und rückwärts schiebt, wobei das System **dadurch gekennzeichnet ist, dass** die hydraulische Servolenkung (4') mit dem Rahmen (32') in einer hinteren Position in Bezug auf die eine Lenkachse (1') verbunden ist und dass die Steuerstange (41') direkt an dem Arm (43') angelenkt ist.

2. Fahrzeug nach Anspruch 1, wobei der Rahmen ein Längselement (32') aufweist und wobei die hydraulische Servolenkung (4') eine 90°-Konfiguration aufweist, die eine Kardanwelle (45') umfasst, die sich in Bezug auf das Längselement (32') parallel und in Bezug auf den Arm (43') der hydraulischen Servolenkung (4') senkrecht erstreckt.

3. Fahrzeug nach Anspruch 1, das ferner einen Kolben (5') umfasst, der direkt auf den Arm (43') der hydraulischen Servolenkung (4') wirkt.

4. Fahrzeug nach Anspruch 3, wobei das erste Ende des zusätzlichen Kolbens (5') mit dem Rahmen (32') verbunden ist und sein zweites Ende mit dem Arm (43') verbunden ist.

5. Fahrzeug nach Anspruch 3, wobei der Kolben (5') in einer Position gegenüber dem Kardangehäuse (45') in Bezug auf die hydraulische Servolenkung (4') angeordnet ist.

## Revendications

1. Véhicule industriel comprenant un cadre (32') et un système de commande de direction comprenant
- un seul essieu directeur (1'),
- une direction assistée hydraulique (4') comportant un bras (43'),
- une bielle de commande (41') de l'essieu directeur (1')
le bras (43') tournant autour de son propre point d'appui défini dans la direction assistée hydraulique et poussant vers l'avant ou vers l'arrière la bielle de commande (41'), le système étant
**caractérisé en ce que** la direction assistée hydraulique (4') est raccordée au cadre (32') dans une position arrière par rapport audit essieu directeur (1'), et **en ce que** ladite bielle de commande (41') est directement articulée sur ledit bras (43').

2. Véhicule selon la revendication 1, dans lequel le cadre comporte un organe longitudinal (32'), et dans lequel ladite direction assistée hydraulique (4') a une configuration à 90°, comprenant un cardan (45') qui s'étend de manière parallèle par rapport à l'organe longitudinal (32') et de manière perpendiculaire par rapport au bras (43') de la direction assistée hydraulique (4').

3. Véhicule selon la revendication 1, comprenant en outre un piston (5') agissant directement sur ledit bras (43') de la direction assistée hydraulique (4').

4. Véhicule selon la revendication 3, dans lequel la première extrémité dudit piston additionnel (5') est raccordée au cadre (32') et sa seconde extrémité est raccordée audit bras (43').

5. Véhicule selon la revendication 3, dans lequel ledit piston (5') est placé dans une position opposée au logement de cardan (45') et par rapport à la direction assistée hydraulique (4').
